# FASCICULE DE BREVET EUROPEEN

(11) **EP 0 801 775 B1**
(45) Date de publication et mention de la délivrance du brevet: **16.06.2004**
(21) Numéro de dépôt: 96937376.0
(22) Date de dépôt: 31.10.1996
(51) Int. Cl.: G06T 17/20

(54) **PROCEDE DE GENERATION DYNAMIQUE D'IMAGES SYNTHETIQUES A NIVEAU DE DETAIL AUTOMATIQUE, ET DISPOSITIF DE MISE EN OEUVRE**
VERFAHREN ZUR DYNAMISCHEN SYNTHETISCHEN BILDERZEUGUNG MIT AUTOMATISCHEM DETAILNIVEAU UND VORRICHTUNG ZUR DURCHFÜHRUNG DIESES VERFAHRENS
METHOD FOR DYNAMICALLY GENERATING SYNTHETIC IMAGES WITH AN AUTOMATIC LEVEL OF DETAIL, AND DEVICE THEREFOR

(30) Priorité: 03.11.1995 FR 9513001
(43) Date de publication de la demande: 22.10.1997
(73) Titulaire: Thales, 75008 Paris (FR)
(72) Inventeur: COUVET, Serge, Thomson-CSF S.C.P.I., F-94117 Arcueil Cédex (FR); DELEPINE, Christophe, Thomson-CSF S.C.P.I., F-94117 Arcueil Cédex (FR)
(74) Mandataire: Chaverneff, Vladimir
(86) Numéro de dépôt international: PCT/FR1996/001716
(87) Numéro de publication internationale: WO 1997/017677

(56) Documents cités:
- US-A- 4 616 217
- US-A- 5 367 615
- ACM TRANSACTIONS ON GRAPHICS, OCT. 1995, ACM, USA, vol. 14, no. 4, ISSN 0730-0301, pages 363-411, XP000558613 DE FLORIANI L ET AL: "Hierarchical triangulation for multiresolution surface description"
- 24TH AIPR WORKSHOP: TOOLS AND TECHNIQUES FOR MODELING AND SIMULATION, WASHINGTON, DC, USA, 11-13 OCT. 1995, vol. 2645, ISSN 0277-786X, PROCEEDINGS OF THE SPIE - THE INTERNATIONAL SOCIETY FOR OPTICAL ENGINEERING, 1996, SPIE-INT. SOC. OPT. ENG, USA, pages 192-203, XP000573570 WILEY D J ET AL: "An adaptive level of detail technique for real time display in virtual reality"
- COMPUTERS & GRAPHICS, JAN.-FEB. 1993, UK, vol. 17, no. 1, ISSN 0097-8493, pages 65-69, XP000546522 FALBY J S ET AL: "NPSNET: hierarchical data structures for real-time three-dimensional visual simulation"

## Description

La présente invention se rapporte à un procédé de génération dynamique d'images synthétiques à niveau de détail automatique, ainsi qu'à un dispositif de mise en oeuvre de ce procédé.

Les machines de synthèse d'images temps réel utilisées dans les simulateurs de vol sont capables de générer des images d'une qualité proche de la réalité grâce en particulier à l'utilisation massive de textures photographiques. Mais le nombre maximal de polygones pouvant être affichés à chaque cycle image demeure leur principale limitation.

Malheureusement, on s'aperçoit que ce nombre est très mal exploité dans certaines situations. En effet, quelle que soit la distance de visibilité de l'observateur, la même attention est portée aux facettes lointaines qu'aux facettes proches. Pourtant, lors du calcul, la pertinence dans l'image des facettes éloignées est très faible par rapport à celles se trouvant à proximité de l'observateur. Certaines tentatives ont été menées dans le passé pour simplifier le paysage à longue distance. Mais celles-ci se sont révélées peu efficaces et trop contraignantes au niveau de la génération des bases de données.

La visualisation de terrains réels en images de synthèse est possible grâce à l'existence de relevés altimétriques issus d'observations radars ou satellites. Ces données altimétriques se présentent en général sous la forme d'une grille bidimensionnelle donnant l'altitude en chaque point.

Le modèle de terrain (algorithmes et structures de données) qui gère ces données altimétriques doit prendre en considération les trois exigences suivantes qui sont essentielles, en particulier pour des simulateurs de pilotage d'avions :
- Fidélité :
   Les aspects caractéristiques du relief (pics, vallées) sont des repères visuels très importants pour les pilotes et influent sur la qualité de leur entraînement et de leurs décisions au cours d'une mission. Le respect des lignes de crête est donc une condition essentielle pour tout modèle cartographique.
- Economie d'informations :
   A précision égale, le nombre de polygones représentant un terrain donné influe directement sur les temps de réponse du simulateur temps réel (rendu, collision, roulement, intervisibilité...). La rugosité d'un terrain n'étant pas régulière, le maillage doit s'adapter au relief, lâche dans les zones de pente constante, fin dans les parties accidentées.
- Rapidité de génération :
   Les bases de données de simulation pouvant couvrir des milliers de Km², leur coût de génération est directement lié à l'utilisation d'algorithmes performants permettant d'intégrer les différentes sources de données (planimétrie, altimétrie, photométrie) en un temps minimum.

Les bases de données de simulateurs d'avions étant en général très vastes, le nombre de facettes représentant le terrain est considérable. Or le visuel ne sait afficher en temps réel que quelques milliers de facettes. Afin d'éliminer très rapidement celles qui ne sont pas dans le champ de vision, on effectue une pré-troncature région. Lors de la modélisation de la base de données, le terrain est partitionné en zones rectangulaires appelées régions. De simples calculs d'intersection pyramide-boîte permettent de sélectionner les régions visibles et d'éliminer ainsi un très grand nombre de facettes.

Cette découpe est également très utile si la base de données ne peut être chargée d'un bloc en mémoire. Il suffit alors de ne charger que les régions comprises dans la sphère centrée sur l'observateur et de rayon égal à la distance de visibilité. Cette base de données locale est mise à jour au fur et à mesure que l'observateur se déplace : les régions qui sortent de la sphère sont déchargées et remplacées par celles qui y rentrent. Ainsi, seul l'espace mémoire limite la taille des bases de données.

Pour de faibles distances de visibilité (< 10 km) et un terrain moyennement accidenté, une pré troncature région s'avère suffisante pour garantir la fréquence de calcul des images. Au-delà, la gestion de charge du visuel demeure problématique. Une surcharge du visuel en polygones se traduit par des sauts d'images suite à des dépassements de cycle. Cette situation est difficilement acceptable pour un simulateur de vol temps réel. Le seul recours dont on dispose aujourd'hui est de simplifier les zones de la base de données où l'affichage "coince". Cette solution est coûteuse et peu pratique. De plus, pour des distances de visibilité importantes, le relief est beaucoup trop simplifié.

Seuls des algorithmes sophistiqués de niveau de détail peuvent diminuer drastiquement le nombre de facettes affichées sans dégrader la qualité de l'image. Ces algorithmes sont nés du constat suivant : la pertinence d'un polygone du terrain, c'est à dire le nombre de pixels qu'il occupe à l'écran, est d'autant plus faible que ce polygone est loin. Si on ne fait rien, une partie de la puissance graphique de la machine est gaspillée à clipper, projeter, texturer... des polygones qui, en fin de compte, n'occupent qu'un ou deux pixels à l'écran. Toute la difficulté consiste donc à simplifier un terrain vu par un observateur mobile sans nuire à la pertinence de l'image.

Devant la complexité mathématique et algorithmique, aucun constructeur de simulateurs n'a intégré un tel dispositif de manière vraiment efficace.

Une première approche consiste à précalculer différents niveaux de détail pour chaque région et à commuter en temps réel d'un niveau à l'autre. Malheureusement cette méthode comporte beaucoup d'inconvénients :
- Dépendance vis à vis des régions :
   Les régions jouant ici le rôle de frontières entre niveaux de détail, la qualité de la commutation dépend de leurs tailles.
- Encombrement mémoire :
   L'encombrement mémoire limite le nombre de niveaux de détail par région et pénalise le chargement dynamique de la base de données. De plus, ce nombre varie en fonction du relief de chaque région.
- Commutation trop brutale :
   Plus le nombre de niveaux de détail d'une région est faible, plus la commutation est brutale. Ces artefacts d'image sont très gênants pour le pilote.

Pour remédier à ces problèmes, des modèles de terrain hiérarchiques ont été envisagés. Notamment, un modèle basé sur la triangulation hiérarchique proposé par « Hierachical Triangulation for multireolsution surface description » par De Floriani et al, ACM Transactions on Graphics, Oct. 1995 et un modèle utilisant une technique de niveau de détail adaptatif décrit dans « An adaptive level of detail technique for real time display in virtual reality » de Widley et al, 24^{th} AIPR Workshop. Une hiérarchie de niveaux de détail au sein d'une même structure de données (quad-tree, Delaunay-pyramid) ne mémorise que les changements pour passer d'un niveau de détail à l'autre, mémorise que les changements pour passer d'un niveau de détail à l'autre, d'où une économie de mémoire importante. L'arborescence est parcourue afin de sélectionner les triangles à afficher en fonction de la précision requise.

Trois inconvénients majeurs subsistent :
- Niveau de détail global :
   La construction des niveaux de détail successifs est uniquement basée sur un critère de précision indépendamment de la position d'un observateur. L'ordre d'apparition des points est figé alors que la pertinence des points varie justement en fonction de la position de l'observateur.
- Modifications du terrain impossibles :
   Ces structures de données hiérarchiques sont rigides et n'autorisent aucune modification du terrain en temps réel. Il serait nécessaire de reconstruire toute l'arborescence, ce qui est trop coûteux.
- Coût additionnel de génération de la base de données.

La génération de la base de données reste quelque chose de très coûteux. Les contraintes liées au temps réel compliquent la modélisation de la scène.

La présente invention a pour objet un procédé de génération dynamique d'images synthétiques permettant de générer en temps réel des images synthétiques avec le maximum possible de fidélité et le meilleur rendu possible, sans nécessiter de moyens de calcul importants, en tenant compte de la pertinence des points des différents niveaux de détail en fonction de la position de l'observateur, ce procédé permettant également des modifications de la configuration du terrain en temps réel.

La présente invention a également pour objet un générateur dynamique d'images synthétiques comportant des moyens qui soient le meilleur marché possible, de préférence des moyens tels que des calculateurs et des moyens de mémorisation de bases de données qui soient simples et couramment disponibles.

Le procédé conforme à l'invention consiste à constituer une base de données en partant d'un fichier contenant les données topographiques relatives aux terrains à visualiser, à éliminer les données les moins significatives, puis à calculer en temps réel les points à afficher en fonction du niveau de détail requis, qui est lui-même fonction de la position de l'observateur, de l'altitude maximale du terrain à visualiser, de la distance de visibilité et du niveau de détail requis, en sélectionnant un sous-ensemble des points de la base de données définissant une portion de terrain dont le niveau de détail a changé, en effectuant un maillage irrégulier de la portion de terrain sélectionnée, de préférence un maillage de type Delaunay, et à appliquer une texture sur les polygones résultant du maillage.

Selon un aspect du procédé de l'invention, on ajuste localement la précision de la représentation du terrain par ajout ou suppression de points dans le maillage, la sélection de ces points étant faite en fonction du relief, de la position de l'observateur et du type de véhicule sur lequel se trouve l'observateur.

La présente invention sera mieux comprise à la lecture de la description détaillée d'un exemple de mise en oeuvre, illustré par le dessin annexé, sur lequel :
- la figure 1 est un exemple de triangulation contrainte de Delaunay, pouvant être mise en oeuvre par la présente invention,
- la figure 2 est un diagramme montrant l'évolution de l'erreur de triangulation d'une surface en fonction du nombre de points choisis pour la représenter,
- la figure 3 est un schéma explicatif montrant l'effet de l'insertion d'un point significatif sur l'erreur de triangulation,
- la figure 4 est un schéma simplifié de l'architecture logicielle d'un processeur graphique mettant en oeuvre le procédé de l'invention,
- la figure 5 est une vue explicative simplifiée en perspective définissant le critère d'erreur angulaire utilisé par la présente invention, et
- la figure 6 est un exemple simplifié expliquant le basculement d'un niveau de détail N à un niveau de détail N+1, conformément à l'invention.

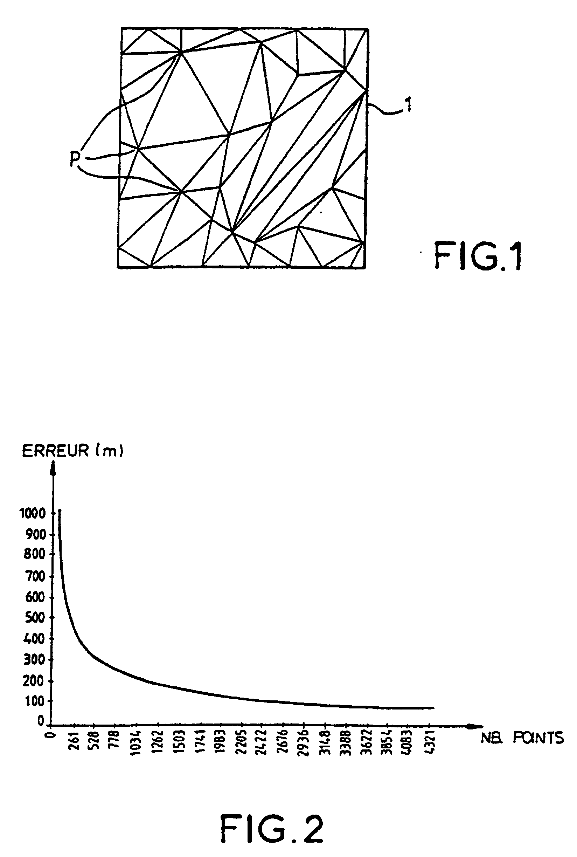

La présente invention, pour réaliser un modèle de terrain, met en oeuvre une technique de maillage basée sur la triangulation de Delaunay, et plus précisément la triangulation contrainte de Delaunay, schématiquement illustrée en figure 1. Les points P définissant les noeuds du maillage peuvent être arbitrairement distribués dans le plan de la région 1 traitée. Cette région 1 est une des zones du terrain. Dans l'exemple de la figure 1, cette zone est simplement un rectangle.

Cette technique de maillage présente de nombreux avantages. En premier lieu, la simplicité des objets traités (triangles) permet de les traiter en temps réel. Ceci est dû en particulier au fait que la majorité des algorithmes de visualisation et de manipulation géométrique sont simplifiés et accélérés grâce à l'utilisation exclusive de triangles. De plus, pour un ensemble de points donné (points d'un relevé attimétrique), la triangulation de Delaunay correspondante est unique, ce qui permet de traiter ces points dans n'importe quel ordre. La propriété remarquable de la triangulation de Delaunay est de générer des triangles qui sont le plus équilatéraux possible. Cette propriété est très avantageuse en synthèse d'images pour laquelle elle diminue les problèmes d'aliassage et de précision numérique.

La triangulation de Delaunay permet de rajouter ou de supprimer un point d'un ensemble déjà triangulé sans avoir à recalculer tous les points, du fait de l'influence uniquement locale d'un tel point. Une telle manipulation interactive favorise également la modification en temps réel d'un terrain visualisé.

La triangulation de Delaunay contrainte garantit l'existence de certaines arêtes dans le maillage, ce qui permet de respecter la géométrie des objets intégrés dans le terrain (routes, lignes de chemin de fer, constructions, ...).

Outre la triangulation, la présente invention met en oeuvre le filtrage des surfaces de terrain visualisées. Ce filtrage permet d'éliminer les points les moins significatifs de cette surface, ce qui permet de simplifier le traitement de la zone géographique à visualiser. La triangulation effectuée ensuite sur les points restants de cette surface correspond au niveau de détail le plus fin de la base de données qui fournit ces points.

Le filtrage consiste à affiner par un processus itératif la triangulation du terrain. Pour chaque point P, on calcule la distance entre ce point et le point Q qui est le projeté de P sur la triangulation courante. Cette distance correspond, localement, à l'erreur existant entre la surface du terrain approximé (résultant de la triangulation courante) et la surface du terrain réel. Après avoir calculé ainsi les erreurs relatives aux différents points, on sélectionne le point d'erreur maximale, et on l'insère dans la triangulation courante. On répète cette étape jusqu'à ce que l'erreur maximale des points de la zone considérée soit inférieure à un seuil que l'on se fixe en fonction du réalisme désiré de l'affichage et compte tenu de la puissance de calcul nécessaire pour franchir ce seuil pour divers types de terrains.

La courbe de la figure 2 montre l'évolution de l'erreur (correspondant à la distance PQ telle que définie ci-dessus) en fonction du nombre de points définissant une zone donnée. La terrain n'étant pas, en général, une surface convexe, l'insertion d'un point dans la triangulation courante peut avoir pour effet d'augmenter l'erreur au lieu de la diminuer.

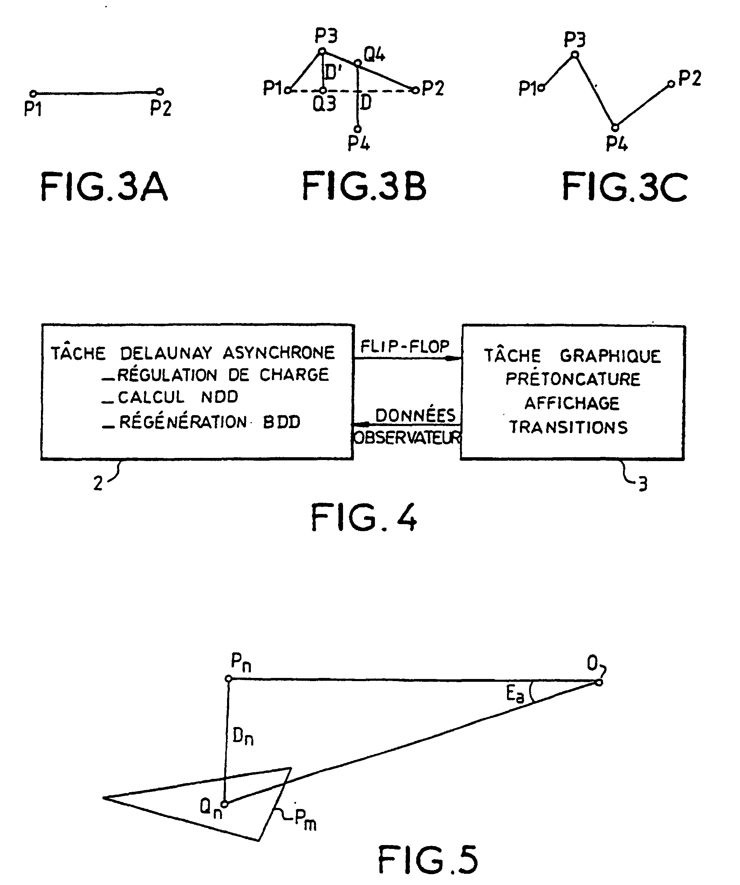

Ainsi, par exemple comme représenté en figure 3A, on suppose que le long d'une section de terrain accidenté on dispose au départ de quatre points P1, P2, P3 et P4. L'approximation initiale est le segment P1-P2. Le point qui est ensuite inséré est celui dont la distance au segment P1-P2 est la plus grande. Supposons qu'il s'agisse de P3. On constate alors que la nouvelle erreur de P4 (distance de P4 au segment P3-P2) peut être supérieure à la distance D'entre P3 et son projeté Q3 sur le segment P1-P2. En général, on constate qu'après plusieurs insertions consécutives, l'erreur finit par descendre au-dessous de la valeur (D' dans l'exemple de la figure 3A) qu'elle avait lors de l'insertion du premier point (P3 pour l'exemple considéré). Dans la pratique, on répète cette étape d'insertion jusqu'à ce que l'erreur maximale devienne inférieure à un seuil que l'on se fixe. Dans le diagramme de la figure 2, on a supprimé les pics temporaires dus à l'insertion de points (tels que P4) correspondant à des reliefs présentant une courbure inverse de la courbure courante. Ainsi, on constate d'après cette figure 2 une diminution quasi exponentielle de l'erreur maximale dès que le nombre de points définissant une zone donnée (de dimensions de l'ordre de 100 km²) dépasse le millier. Il est donc facile, pour un type de relief donné (peu accidenté, moyennement montagneux, très montagneux...) d'effectuer des essais pour obtenir une courbe telle que celle de la figure 2, et d'optimiser le rapport entre l'exactitude de la représentation du terrain et le nombre de points nécessaires à une représentation fidèle du terrain, sans surcharger inutilement le processeur de calcul graphique ou "moteur graphique" (au-delà d'un certain nombre de points, le gain en précision devient dérisoire au vu de l'augmentation du nombre de calculs).

A partir des principes ci-dessus, l'invention consiste à modifier en temps réel la base de données de manière à n'envoyer au moteur graphique que les polygones caractéristiques du point de vue de l'observateur. La précision du terrain est ajustée localement par ajout et suppression de points dans le maillage courant. La sélection des points à insérer et à supprimer tient compte du relief (en particulier pour bien respecter les lignes de crête, qui sont un élément important du paysage pour un pilote d'hélicoptère ou d'avion), de la position de l'observateur et du type de mobile (char, avion, hélicoptère...).

Le schéma de la figure 4 représente de façon simplifiée les deux couches logicielles principales 2, 3 du moteur graphique mettant en oeuvre le procédé de l'invention. La couche 2 est celle qui est chargée de la triangulation de Delaunay, effectuée en mode asynchrone. Elle effectue, entre autres, la régulation de charge du processeur (optimisation du traitement des paquets de données transitant en mode asynchrone), le calcul du niveau de détail et la régénération de la base de données (après modification locale de la description du terrain) au format du processeur hôte.

La couche 3 est la tâche graphique proprement dite, qui rafraîchit l'écran à une cadence de, par exemple, 30 Hz. Cette tâche effectue essentiellement la prétroncature des régions (pour n'avoir à afficher que les régions visibles par l'utilisateur), l'affichage, et la transition entre deux niveaux de détail.

La coopération entre les deux couches logicielles 2 et 3 se passe de la façon suivante. On suppose que le système graphique affiche des scènes que doit voir un observateur se trouvant dans un simulateur de véhicule mobile à un instant donné. La tâche graphique 3 envoie à intervalles de temps réguliers (par exemple à la cadence de 30 Hz, comme précisé ci-dessus), les polygones maillés en Delaunay à afficher (en fonction du déplacement dudit véhicule). Ces polygones correspondent au niveau de détail courant qui est affiché. De manière asynchrone, la tâche Delaunay 2 recalcule le niveau de détail approprié, afin de tenir compte du changement de position de l'observateur par rapport à la région affichée. Les points alors devenus pertinents (visibles par l'observateur et nécessaires à la définition réaliste du paysage, c'est-à-dire pas trop éloignés de l'observateur) sont insérés dans le maillage Delaunay. Les points devenus inutiles sont supprimés. Le procédé de sélection de ces points est expliqué plus en détail ci-dessous. Dès que le nouveau maillage est calculé, il se substitue à l'ancien par basculement (marqué "flip-flop" en figure 4).

A chaque requête de changement de niveau de détail transmise par la couche 3, le processeur graphique recalcule la pertinence des points issus de la base de données. Dans le cas d'un observateur pouvant se retourner très rapidement (pilote d'hélicoptère ou de char), toutes les régions de terrain de la base de données locale sont traitées. Dans le cas contraire (pilote d'avion civil, ...), seules les régions relatives au cap du véhicule sont recalculées. On peut ainsi diminuer le nombre de régions à traiter. La sélection des points à insérer ou à supprimer dans un maillage se fait en respectant les trois critères suivants :
1°) critère de déterminisme. La triangulation obtenue pour une position d'observateur donnée doit toujours être la même, quel qu'ait été le chemin suivi par cet observateur pour arriver à cette position. En d'autres termes, le calcul de la pertinence d'un point doit être indépendant des calculs précédents.
2°) critère de continuité d'aspect des régions. Si un point est inséré ou supprimé sur un bord de région, il doit aussi être inséré ou supprimé pour la région voisine. De cette façon, on garantit le raccordement géométrique entre régions voisines.
3°) critère de respect du relief. Les points caractéristiques du terrain doivent être conservés.

Selon l'invention, le calcul de la pertinence d'un point Pn d'un maillage (c'est-à-dire la détermination de la nécessité de garder ce point ou de le supprimer lors d'un changement de niveau de détail) se fait de la faon suivante.

Soient O le point de l'espace où est situé l'observateur, et Qn la projection verticale (selon la verticale locale) de Pn sur la triangulation Pm ne contenant pas le point Pn. La variable déterminant la pertinence du point Pn est l'angle Ea formé par les demi-droites OPn et OQn (voir figure 5). Cet angle Ea peut être appelé erreur angulaire (correspondant à la suppression de Pn).

Pour satisfaire le premier critère cité ci-dessus, il est important que l'évaluation de l'angle Ea fournisse toujours la même valeur pour une position courante donnée du point, car autrement, la triangulation serait non déterministe. Un phénomène d'instabilité serait même produit si le calcul de Ea dépendait des points voisins, car alors l'insertion d'un point affecterait les erreurs angulaires des points voisins, ce qui pourrait entraîner une boucle infinie d'insertions et de suppressions de points. De plus, les points frontières entre deux régions adjacentes ne seraient pas insérés ou supprimés en même temps parce que leurs erreurs angulaires seraient différentes, et il y aurait non respect du critère 2 ci-dessus.

Pour toutes ces raisons, lors du calcul de Ea, la distance Dn entre Pn et Qn n'est pas calculée en projetant Pn sur la triangulation courante ne contenant pas Pn. En fait, cette distance devient constante et est précalculée de la façon exposée ci-dessus en référence aux figures 3A à 3C. Lors de la simulation visuelle, cette erreur d'élévation est transformée en une erreur angulaire par rapport à l'observateur. Si l'erreur angulaire ainsi calculée est supérieure à une valeur de seuil Eseuil, le point Pn est inséré, sinon il est supprimé.

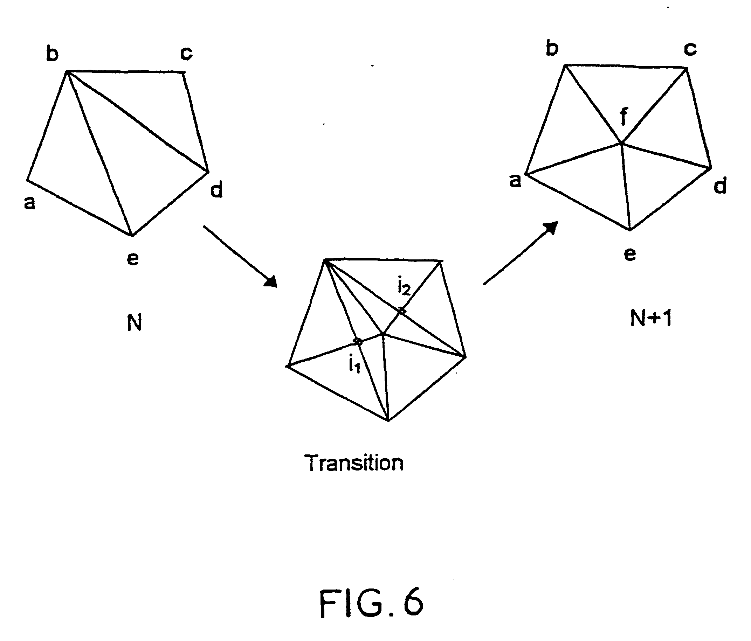

La tâche graphique 3 commande la commutation du niveau de détail, c'est-à-dire la commutation entre une scène antérieure à une opération d'insertion/suppression de points due à un changement de position de l'observateur, et une scène juste postérieure à cette opération. On a représenté, de façon simplifiée, sur la figure 6, qui est une vue de dessus, le processus de basculement d'un niveau de détail N à un niveau N+1. Pour éviter que la transition entre les triangulations correspondant à ces niveaux de détail ne produise un artefact visuel dénommé "popping", mais soit pratiquement invisible, ou en tout cas pour qu'elle ne soit pas gênante, on procède à un "morphing", technique d'interpolation bien connue en soi. La triangulation intermédiaire de morphing est affichée pendant tout le temps que dure l'opération de morphing (pour éviter d'avoir un saut brutal entre les niveaux de détail de départ et d'arrivée). Cette triangulation intermédiaire est calculée en conservant les points des triangulations des deux niveaux de détail, en y ajoutant les éventuels points d'intersection.

Dans l'exemple simplifié de la figure 6, on a représenté à gauche trois triangles non coplanaires adjacents faisant partie du niveau de détail N, formant ensemble une surface gauche à contour pentagonal a, b, c, d, e, dont les arêtes communes chacune à deux triangles sont be et bd. Sur la droite de la figure, on a représenté le niveau de détail N + 1 (on peut tout aussi bien parler du niveau N-1), dont la surface gauche a le même contour pentagonal a, b, c, d, e que dans le niveau de détail N, mais comportant un sommet f qui, en vue de dessus est situé sensiblement au centre du contour pentagonal. Ce sommet f est relié par cinq arêtes aux cinq sommets respectifs du pentagone. On a représenté au milieu de la figure 6 la triangulation intermédiaire.

Pour assurer une transition pratiquement invisible entre les niveaux de détail N et N+1, on impose dans la triangulation de départ trois nouveaux points (voir représentation au milieu de la figure 6) :
- i₁ sur l'arête be (sur la verticale passant par be et af)
- i₂ sur l'arête bd (sur la verticale passant par bd et cf)
- f sur la face bde (sur la verticale passant par la position finale de f).

Ensuite, ces trois points sont progressivement déplacés (opération de "morphing") jusqu'à ce que :
- i₁ soit sur l'arête af
- i₂ soit sur l'arête fc
- f atteigne sa position de référence.

Lorsque les positions finales de ces trois points sont atteintes, l'opération de morphing est terminée et la nouvelle triangulation du niveau de détail N + 1 est affichée (c'est-à-dire la surface triangulaire de droite de la figure 6).

La vitesse d'élévation d'un point dépend de plusieurs facteurs, en particulier d'au moins l'un des facteurs suivants :
- de sa visibilité par l'observateur. Ainsi, un point qui ne se trouve pas dans le champ visuel instantané de l'observateur est élevé immédiatement.
- de la vitesse de déplacement de l'observateur. Ainsi, lorsqu'il est immobile, l'élévation des points est gelée.
- de la distance du point à l'observateur. A altitude égale, plus le point est éloigné de l'observateur, plus il monte vite.

Grâce à ces caractéristiques du procédé de l'invention, on obtient une commutation rapide des niveaux de détail consécutifs avec la meilleure fluidité possible de transition entre images.

Les autres avantages du procédé de l'invention sont :
- une réduction du volume de la base de données sans perte de qualité d'image. Le système de visualisation est capable de calculer une image de rendu égal à celui obtenu par les procédés de l'art antérieur avec beaucoup moins de polygones: en moyenne, on peut éliminer 2/3 des facettes sans dégrader l'image.
- automatisation de la gestion de charge du processeur graphique. Il adapte la base de données aux performances du matériel par simple réglage d'un paramètre (Erreur angulaire de seuil). Il permet donc d'obtenir le meilleur réalisme possible pour l'affichage des scènes compte tenu des possibilités du système graphique et de visualisation.
- Il simplifie la génération de la base de données : le pré-calcul des niveaux de détail devient inutile (le niveau de détail approprié est généré directement par la couche 2 de triangulation), ce qui diminue corrélativement le prix de revient des moyens de production de la base de données.
- Il permet la modification en temps réel de la représentation du terrain, en particulier afin de pouvoir l'adapter à des scénarios de simulation exigeants, ou à des besoins nouveaux, telle la simulation distribuée interactive.

## Revendications

1. Procédé de génération dynamique d'images synthétiques à niveau de détail automatique, selon lequel on constitue une base de données en partant d'un fichier contenant les données topographiques relatives aux terrains à visualiser, et on élimine les données les moins significatives, **caractérisé en ce qu'**on calcule en temps réel les points à afficher en fonction du niveau de détail requis, qui est lui-même fonction de la position de l'observateur, des lignes de crête du terrain à visualiser, de la distance de visibilité et du niveau de détail requis, que l'on sélectionne un sous-ensemble des points de la base de données définissant une portion de terrain dont le niveau de détail a changé, que l'on effectue un maillage irrégulier de la portion de terrain sélectionnée, et que l'on applique une texture sur les polygones résultant du maillage.

2. Procédé selon la revendication 1, **caractérisé en ce que** le maillage est du type Delaunay.

3. Procédé selon l'une des revendications 1 ou 2, **caractérisé en ce que** le niveau de détail requis est déterminé en fonction de l'erreur angulaire maximale admise (Ea) telle que vue par l'observateur.

4. Procédé selon l'une des revendications précédentes, **caractérisé en ce que** la transition entre niveaux de détail successifs s'effectue au rythme du rafraîchissement de l'écran d'affichage des images synthétiques.

5. Procédé selon la revendication 4, **caractérisé en ce que** la vitesse d'élévation ou d'abaissement d'un point inséré ou supprimé est variable.

6. Procédé selon la revendication 5, **caractérisé en ce que** ladite vitesse est fonction de sa visibilité par l'observateur et/ou de la vitesse de déplacement de l'observateur et/ou de la distance du point à l'observateur.

7. Procédé selon l'une des revendications 4 à 6, **caractérisé en ce que** la transition entre niveaux de détail successifs se fait par transition douce ("morphing").

## Patentansprüche

1. Verfahren zur dynamischen Erzeugung von synthetischen Bildern mit automatischem Detaillierungsgrad, gemäß dem eine Datenbank ausgehend von einer Datei erstellt wird, welche die topographischen Daten hinsichtlich der darzustellenden Gelände enthält, und indem die am wenigsten signifikanten Daten entfernt werden, **dadurch gekennzeichnet, dass** die darzustellenden Punkte in Echtzeit in Abhängigkeit vom erforderlichen Detaillierungsgrad berechnet werden, der selbst von der Position des Betrachters, von den Kammlinien des darzustellenden Geländes, von der Sichtweite und dem erforderlichen Detaillierungsgrad abhängig ist, dass eine Untereinheit der Punkte der Datenbank ausgewählt wird, die einen Geländeabschnitt definiert, dessen Detaillierungsgrad sich geändert hat, dass eine unregelmäßige Vernetzung des ausgewählten Geländeabschnitts durchgeführt wird, und dass eine Struktur auf die aus der Vernetzung entstehenden Polygone angewendet wird.

2. Verfahren nach Anspruch 1, **dadurch gekennzeichnet, dass** die Vernetzung vom Delaunay-Typ ist.

3. Verfahren nach einem der Ansprüche 1 oder 2, **dadurch gekennzeichnet, dass** der erforderliche Detaillierungsgrad in Abhängigkeit vom maximal zulässigen Winkelfehler (Ea) bestimmt wird, wie er vom Betrachter gesehen wird.

4. Verfahren nach einem der vorhergehenden Ansprüche, **dadurch gekennzeichnet, dass** der Übergang zwischen aufeinanderfolgenden Detaillierungsgraden im Auffrischungsrhythmus des Anzeigebildschirms der synthetischen Bilder erfolgt.

5. Verfahren nach Anspruch 4, **dadurch gekennzeichnet, dass** die Geschwindigkeit des Anhebens oder Absenkens eines eingefügten oder beseitigten Punkts variabel ist.

6. Verfahren nach Anspruch 5, **dadurch gekennzeichnet, dass** die Geschwindigkeit des Anhebens oder Absenkens von der Erfassbarkeit des Punkts durch den Betrachter und/oder der Bewegungsgeschwindigkeit des Betrachters und/oder dem Abstand des Punkts vom Betrachter abhängt.

7. Verfahren nach einem der Ansprüche 4 bis 6, **dadurch gekennzeichnet, dass** der Übergang zwischen aufeinanderfolgenden Detaillierungsgraden durch sanften Übergang ("morphing") erfolgt.

## Claims

1. Method for dynamic generation of synthetic images with automatic detail level, according to which a database is formed starting from a file containing the topographical data relating to the terrains to be visualized, and the least significance data are eliminated, **characterized in that** the points to be displayed are calculated in real-time as a function of the required detail level, which is itself a function of the observer's position, the ridge lines of the terrain to be visualized, the visibility distance and the required detail level, **in that** a subset of points is selected from the database, defining a terrain portion whose detail level has changed, **in that** irregular mesh generation is carried out on the selected terrain portion, and **in that** a texture is applied to the polygons resulting from the mesh generation.

2. Method according to Claim 1, **characterized in that** the mesh generation is of the Delaunay type.

3. Method according to one of Claims 1 and 2, **characterized in that** the required detail level is determined as a function of the maximum allowed angular error (Ea) as seen by the observer.

4. Method according to one of the preceding claims, **characterized in that** the transition between successive detail levels takes place at the refresh rate of the screen for displaying the synthetic images.

5. Method according to Claim 4, **characterized in that** the rise or fall speed of an inserted or removed point is variable.

6. Method according to Claim 5, **characterized in that** the said speed is a function of its visibility by the observer and/or the observer's speed of movement and/or the distance from the point to the observer.

7. Method according to one of Claims 4 to 6, **characterized in that** the transition between successive detail levels takes place by morphing.
